(19) Europäisches Patentamt
European Patent Office
Office européen des brevets

(11) Numéro de publication : **0 418 129 B1**

# (12) FASCICULE DE BREVET EUROPEEN

(45) Date de publication du fascicule du brevet :
**29.12.93 Bulletin 93/52**

(51) Int. Cl.$^5$ : **C08L 29/04,** C08L 23/12, // (C08L29/04, 23:12), (C08L23/12, 29:04)

(21) Numéro de dépôt : **90402470.0**

(22) Date de dépôt : **07.09.90**

(54) **Alliages à base d'un copolymère éthylène alcool vinylique à propriété barrière aux gaz, thermoformable et/ou résistant à la flexion répetée.**

(30) Priorité : **14.09.89 FR 8912041**

(43) Date de publication de la demande :
**20.03.91 Bulletin 91/12**

(45) Mention de la délivrance du brevet :
**29.12.93 Bulletin 93/52**

(84) Etats contractants désignés :
**AT BE CH DE DK ES FR GB GR IT LI LU NL SE**

(56) Documents cités :
**FR-A- 2 000 728**
**US-A- 4 537 929**

(73) Titulaire : **ELF ATOCHEM S.A.**
**4 & 8, Cours Michelet La Défense 10**
**F-92800 Puteaux (FR)**

(72) Inventeur : **Moulies, Jean-Claude**
**13 rue des Ecureuils**
**F-64230 Lescar (FR)**
Inventeur : **Borg, Patrick**
**rue de l'Abbaye**
**F-27170 Beaumont le Roger (FR)**
Inventeur : **Nogues, Pierre**
**Le Bourg, Saint-Aubin le Vertueux**
**F-27300 Bernay (FR)**

EP 0 418 129 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les alliages renfermant essentiellement un copolymère éthylène alcool vinylique (EVOH) et un polypropylène (PP) pour des applications qui nécessitent des propriétés de perméabilité aux gaz et des propriétés mécaniques compatibles avec la préparation d'emballage, par exemple film monocouche, multicouche, barquette, et réservoir.

Les technologies de mise en oeuvre de ces alliages sont celles habituellement employées, par exemple : extrusion couchage, extrusion soufflage, coextrusion, thermoformage, orientation et autres.

Pour la préparation d'emballage, lorsque les perméabilités aux gaz doivent être très faibles, on a recours à des polymères dont les propriétés barrière aux gaz sont très performantes.

L'EVOH est reconnu comme un excellent matériau à cet égard ; cependant, ce copolymère présente un certain nombre d'inconvénients dont sa faible aptitude à la transformation à haute température en comparaison avec les polymères thermoplastiques, tels que polyéthylène et polypropylène, couramment employés dans le domaine de l'emballage. Il présente également une rigidité et une fragilité à l'état solide telles que, par exemple, transformé sous forme de film, ses propriétés de perméabilité aux gaz ne résistent pas à des flexions répétées qui occasionnent des fissurations. En outre, sa faible aptitude à la transformation ne lui permet pas de supporter des modifications de géométrie qui sont courantes aux thermoplastiques telle que l'orientation ou le thermoformage.

L'invention est relative aux compositions constituées essentiellement d'un mélange en poids de :

- 42,5 à 99,5 % d'EVOH
- 0,4 à 42,5 % de polypropylène
- 0,1 à 15,0 % d'agent compatibilisant.

La composition majoritaire en EVOH de l'alliage se caractérise par le fait que la matrice ou phase dispersante est l'EVOH. Le PP est dispersé sous forme de nodules plus ou moins sphériques.

L'adhésion entre les phases est assurée par un copolymère greffé à base d'α-mono-oléfine appelé agent compatibilisant décrit dans la demande de brevet français n° 88 03877 et représenté par la formule :

Aa Mb Xc Pd dans laquelle :

- AaMb correspond au (co)polymère-tronc ;
- XcPd correspond à des polymères greffés sur le (co)polymère-tronc ;
- A est un motif dérivé d'une α-mono-oléfine contenant de 2 à 8 atomes de carbone, et de préférence un motif dérivé de propylène ;
- M est choisi dans le groupe constitué par :
  . les motifs dérivés d'une α-mono-oléfine contenant de 2 à 8 atomes de carbone, et de préférence dérivés d'éthylène,
  . les motifs dérivés de plusieurs α-mono-oléfines telles que définies précédemment, qui peuvent être simplement mélangées ensemble ou être copolymérisées de façon statistique ou séquencées, et de préférence dont l'une des α-mono-oléfines est l'éthylène,
  . les motifs dérivés d'un monomère pouvant être polymérisé avec une des α-mono-oléfines telles que définies précédemment, par exemple un acrylate d'alkyle,
- Les motifs A et M qui constituent ledit (co)polymère-tronc sont copolymérisés de façon statistique ou séquencés ou sont simplement mélangés ;
- X est un motif dérivé d'un monomère pouvant être greffé radicalairement sur un homo ou copolymère d'α-mono-oléfine et possédant une fonction pouvant réagir avec un motif amine ;
- P provient d'un oligomère de polyamide de formule :

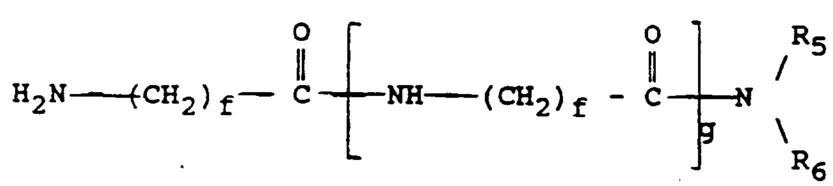

dans laquelle :

- f est un nombre de 3 à 11,
- g est un nombre de 3 à 80 et de préférence compris entre 15 et 55,
- $R_5$ est l'hydrogène ou un groupement alkyle linéaire ou ramifié contenant jusqu'à 20 atomes de carbone,
- $R_5$ est un groupement possédant jusqu'à 20 atomes de carbone alkyle ou alcényle linéaire ou ramifié, un radical cycloaliphatique, saturé ou non, un radical aromatique ou leur combinaison,

- a, b, c, et d sont des nombres tels que :
  . a est une valeur variant de 0 à 5000 et de préférence entre 350 et 2000,
  . la somme a + b est comprise entre 350 et 45000 et de préférence entre 500 et 10000,
  . c est choisi de telle sorte que la teneur pondérale du motif X greffé sur le (co)polymère-tronc par rapport au copolymère greffé avec X est compris entre 500 ppm et 10 %, de préférence inférieur à 2 %, et mieux compris entre 5000 ppm et 1,5%,
  . d est supérieur à 0 et inférieur ou égale à c, et de préférence au moins égale à 0,3 c.

Par (co)polymère-tronc de formule AaMb, dans laquelle a, b, A et M sont tels que définis précédemment, on entend tout copolymère composé de motifs A et M, dérivés de monomères polymérisés de façon statistique ou séquencée, ou éventuellement tout mélange de polymères obtenus par polymérisations séparées de monomères dont dérivent les motifs A et M.

Cette copolymérisation ou ce mélange peuvent s'effectuer selon les procédés connus. A titre d'exemple, on peut citer la copolymérisation de propylène et d'α-oléfine en présence de catalyseur ZIEGLER ou de coordination.

Le monomère possédant le motif X peut répondre notamment à l'une des formules suivantes :

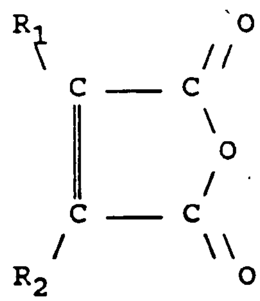

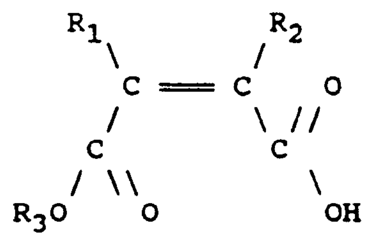

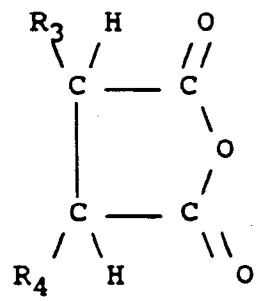

dans lesquelles :

. $R_1$ et $R_2$ sont soit l'hydrogène, soit une chaîne alkyle linéaire ou ramifiée contenant jusqu'à 8 atomes de carbone, l'un au moins de ces symboles représentant l'hydrogène,. $R_3$ est l'hydrogène ou un groupement alkyle linéaire ou ramifié contenant jusqu'à 10 atomes de carbones,

. $R_4$ est un groupement alcényle linéaire ou ramifié contenant jusqu'à 12 atomes de carbone.

Les monomères possédant le motif X préférés sont l'anhydride citraconique, l'acide fumarique, l'acide mésaconique, l'anhydride d'acide 3-allylsuccinique, et tout particulièrement, l'anhydride maléique.

l'EVOH est un copolymère constitué essentiellement d'unités éthylène et alcool vinylique et peut contenir de faibles quantités d'autres unités monomères, en particulier d'unité ester de vinyle. Ces copolymères peuvent être obtenus par saponification ou alcoolyse complète ou totale de copolymère éthylène - ester de vinyle. Parmi les esters de vinyle, l'acétate de vinyle est le monomère préféré. Le degré de saponification ou d'alcoolyse est au moins égal en moles à 90 %, et de préférence est compris entre 54 et 99,5 %. La proportion en moles d'éthylène dans l'EVOH est comprise dans l'intervalle de 3 à 75 % et de préférence de 10 à 50 %.

Le polypropylène est un polymère constitué essentiellement d'unité propylène. Il peut contenir de faibles quantités au plus 40 % molaire d'une autre unité monomère en particulier éthylène et/ou une ou plusieurs α oléfine contenant 4 à 6 atomes de carbone. On utilise en particulier un homopolypropylène ou un copolymère bloc du propylène avec 0,5 à 30 % molaire d'éthylène ou un copolymère statistique de propylène et d'éthylène contenant 0,1 à 30 % molaire d'éthylène.

Aux trois principaux constituants que sont l'EVOH, le polypropylène et l'agent compatibilisant, on peut éventuellement ajouter de faibles quantités d'autres composés du type stabilisant, agent antistatique, lubrifiant, plastifiant et d'autres composés polymériques.

Les constituants étant sous forme de poudre ou de granulés, la préparation de l'alliage est réalisée à l'état fondu en général par mélangeage au moyen d'une machine de transformation du type extrudeuse monovis ou bivis contra ou corotative ou d'un malaxeur à cylindres.

Les alliages revendiqués ont en particulier une très faible perméabilité aux gaz ; ils présentent de meilleures propriétés d'étirage en transformation que l'EVOH ayant servi à la préparation de l'alliage, par exemple vis à vis du thermoformage. De plus, dans le cadre d'une application de type coextrusion, l'adhésion entre les couches polymère adhésif/matériau barrière aux gaz est nettement améliorée lorsqu'on emploie un alliage selon l'invention. La résistance à la fissuration en flexion répétée des alliages est considérablement améliorée par rapport à celle de l'EVOH ayant servi à la préparation de l'alliage.

Les proportions des trois principaux constituants de l'alliage son comprises dans les fourchettes suivantes :

| | |
|---|---|
| EVOH : | 42,5 - 99,5 % poids |
| Polypropylène : | 42,5 - 0,4 % poids |
| Agent compatibilisant : | 0,1 - 15,0 % poids |

Les autres constituants éventuellement ajoutés ne représentent pas plus de 20 parties en poids pour 80 parties en poids de l'alliage.

L'exemple suivant illustre l'invention.

**EXEMPLE** :

Rôle de l'agent compatibilisant et morphologie des alliages

Cinq compositions sont réalisées à l'aide d'une extrudeuse double vis corotative avec les proportions des trois constituants EVOH : copolymère éthylène - acétate de vinyle hydrolysé à 32 % en mole d'éthylène d'indice de fusion (Melt Index : MI), 3,2 g/10 minutes mesuré à 210°C sous 2,16 Kg, PP : copolymère statistique éthylène - propylène à 3 % en poids d'éthylène de MI 2 g/10 minutes mesuré à 230 °C sous 2,16 Kg, agent compatibilisant : copolymère greffé, indiqués dans le tableau I.

Ces compositions sont ensuite extrudées sous forme de film de 20 µm d'épaisseur au moyen d'une extrudeuse monovis. Ces films sont observés par microscopie électronique à balayage (MEB) après fracture cryogénique.

Du fait de l'orientation due à l'extrusion du film, la phase dispersée se présente sous forme de bâtonnets orientés dans le sens de l'extrusion ; la taille des bâtonnets est mesurée sur les fractures après dissolution dans du xylène de la phase dispersée.

L'évaluation de l'adhésion entre phases est faite sur les fractures de façon qualitative.

Agents compatibilisants

Ce sont des copolymères greffés qui peuvent être représentés par l'expression Aa Mb Xc Pd où :

A est un motif dérivé du propylène

M est un motif dérivé de l'éthylène

X est un motif dérivé l'anhydride maléique

P est un oligomère de caprolactame de masse moléculaire de 2700 déterminée par dosage potentiométrique des fonctions amines terminales.

**TABLEAU I**

| ESSAIS | COMPOSITION DE L'ALLIAGE (% en poids) EVOH | PP | AGENT COMPATIBILISANT | OBSERVATION AU MEB DE L'ALLIAGE EN FILM DE 20 µm D'EPAISSEUR |
|---|---|---|---|---|
| 1 comparatif | 85 | 15 | 0 | Le PP se répartit dans la matrice EVOH sous forme de bâtonnets cylindriques de 0,7 à 5 µm de section. Aucune adhésion entre phases. |
| 2 comparatif | 80,75 | 14,25 | $A_{663}M_{136}X_{0,65}$ : 4<br>EVOH à 29 % mole d'éthylène : 1<br>(total : 5) | Le PP se répartit dans la matrice EVOH sous forme de bâtonnets cylindriques de 0,5 à 3 µm de section. Il existe une faible adhésion entre phases. |
| 3 | 80,75 | 14,25 | $A_{663}M_{136}X_{2,91}P_{0,87}$ : 5 | Le PP se répartit dans la matrice EVOH sous forme de bâtonnets cylindriques de 0,1 à 2 µm de section. Il existe une forte adhésion entre phases |
| 4 | 85,5 | 9,5 | $A_{663}M_{136}X_{2,91}P_{0,87}$ : 5 | Le PP se répartit dans la matrice EVOH sous forme de bâtonnets cylindriques de 0,05 à 1,5 µm de section. Il existe une forte adhésion entre phases. |
| 5 comparatif | 9,5 | 85,5 | $A_{663}M_{136}X_{2,91}P_{0,87}$ : 5 | L'EVOH se répartit dans la matrice PP sous forme de bâtonnets cylindriques de 0,1 à 2 µm de section. Il existe une forte adhésion entre phases. |

Il apparaît que l'absence d'agent compatibilisant conduit à dispersion grossière du PP dans l'EVOH. L'emploi de l'agent compatibilisant $A_{663}M_{136}X_{2,91}P_{0,87}$ conduit à une meilleure dispersion du PP dans l'EVOH que celui du simple PP maléïsé $A_{663}M_{136}X_{0,65}$. De plus, l'adhésion entre phases est meilleure avec l'agent compatibilisant $A_{663}M_{136}X_{2,91}P_{0,87}$ qu'avec $A_{663}M_{136}X_{0,65}$.

Dans tous les cas, les alliages sont constitués par une matrice EVOH sauf pour l'essai 5 qui est constitué d'une matrice PP car la proportion en PP dans cet essai est élevée.

Perméabilité à l'oxygène de films minces

Des films sont préparés à partir de deux EVOH et des trois alliages décrits dans les essais 3, 4 et 5 par extrusion. La perméabilité à l'oxygène de ces films est mesurée suivant la norme ASTM D 398581.

Epaisseur des films : 20 µm.

| ESSAIS | Nature du matériau | Perméabilité à l'oxygène cc. 20 µm / m2.jour. atm. |
|---|---|---|
| FILMS OBTENUS PAR EXTRUSION SOUFFLAGE | | |
| | | 0 % d'humidité relative 20° C |
| 6 | EVOH à 44 % en mole d'éthylène MI : 3,5 g/10 min. (210°C-2,16 Kg) | 1,20 |
| 7 | EVOH à 32 % en mole d'éthylène MI : 3,2g/10 min. (210°C-2,16 Kg) | 0,2 |
| 8 | Alliage de l'essai 3 | 0,3 |
| FILMS OBTENUS PAR EXTRUSION CAST | | |
| | | 75 % d'humidité relative 25°C |
| 9 | Alliage de l'essai 4 | 2 |
| 10 | Alliage de l'essai 5 | 2760 |

Il apparaît qu'à épaisseur égale, l'alliage de l'essai présente une perméabilité voisine de celle du copolymère EVOH riche en unité alcool vinylique et meilleure que celle du copolymère à plus faible teneur en unité alcool vinylique : essais 6 et 7.

De plus, pour que la perméabilité à l'oxygène soit faible, il est nécessaire de préparer l'alliage avec une matrice EVOH et une phase dispersée polypropylène : essais 9 et 10.

Coextrusion

On obtient par coextrusion une feuille tricouche dont la structure est la suivante :

. PP (Copolymère statistique éthylène-propylène à 3 % en éthylène: épaisseur 0,7 mm

. Liant de coextrusion OREVAC ® PP FT (copolymère éthylène-propylène à 1500 ppm d'anhydride maléïque greffé) : épaisseur 0,1 mm

. Matériau barrière aux gaz (EVOH pur ou alliage dont la compositon est donnée dans le tableau II) : épaisseur 0,2 mm.

Ces essais ont été effectués sur un matériel de coextrusion de feuilles tricouches :

- Extrudeuse Diamètre 60 mm - 28 D : PP

  Température : 200-210-220-230°C

  Vitesse de vis : 40 t/mn

- Extudeuse Diamètre 45 mm - 20 D: Matériau barrière aux gaz
  Température : 210-220-230-230°C
  Vitesse de vis : 14 t/mn
- Extudeuse Diamètre 30 mm - 22 D : liant
  Température : 195-200-210-210°C
  Vitesse de vis : 40 t/mn
- Filière : tricouches multicanaux
  Largeur 400 mm - Entrefer : 1,2 mm
  Température : 6 X 230°C
- Cylindres polisseurs : Température : 55-90-90°C
  Ouverture : 0,95 mm
  Vitesse de tirage : 1,12 m/mn

L'adhérence entre les couches de liant et de matériau barrière aux gaz est mesurée par un test de pelage à 200 mm/minute. Les résultats sont rassemblés dans le tableau II suivant :

**TABLEAU II**

| Essais | Nature du matériau barrière aux gaz | ADHESION EN G/CM Valeur moyenne | Valeurs extrêmes |
|---|---|---|---|
| 11 | * EVOH | 2900 | 2600-3300 |
| 12 | ** EVOH | 2900 | 2850-3000 |
| 13 | *** Alliage | 3900 | 3800-4000 |

* EVOH à 44 % en mole d'éthylène - MI 2IO° C 2,16 kg : 3,5

** EVOH à 32 % en mole d'éthylène - MI 2IO° C 2,16 kg : 3,2

*** Composition de l'alliage en poids:

- EVOH à 32 % en mole d'éthylène (MI 210° C - 2,16 Kg : 3,2) : 80,75 %
- PP Copolymère statistique éthylène-propylène à 3 % en éthylène (MI 230° C - 2,16 Kg : 10) : 14,25 %
- Agent compatibilisant : $A_{663}M_{136}X_{2,91}P_{0,87}$ : 5 %

Thermoformage

Les feuilles tricouches préparées par coextrusion dont la fabrication a été décrite précédemment sont thermoformées dans les condition suivantes :

Conditions communes à tous les essais

- Chauffage du four supérieur : 80 °C
- Chauffage du four inférieur : 100 °C
- Chauffage du bâti : 80°C
- Temps de cycle dans le moule : 15 secondes
- Température du poinçon : 140°C
- Temps de chauffage : 25 secondes (dans tous les cas quelque soit le rapport hauteur/diamètre)

- Essais effectués avec face EVOH vers le bas (= extérieur du gobelet).

Mesures d'épaisseur

On mesure en différents points, selon le schéma 1 annexé, l'épaisseur totale et l'épaisseur de la couche de matériau barrière au gaz.

Le rapport de thermoformage est : $\frac{H}{D} = 0{,}95$

Les mesures d'épaisseur sont rassemblées dans le tableau III.

**TABLEAU III**

| Essais | 14 | | 15 | | 16 | |
|---|---|---|---|---|---|---|
| Nature du matériau barrière aux gaz / point de mesure | EVOH à 44 % mole d'éthylène | | EVOH à 32 % mole d'éthylène | | Alliage Essai 13 | |
| | Epaisseur totale (µm) | Epaisseur EVOH / Epaisseur totale | Epaisseur totale (µm) | Epaisseur EVOH / Epaisseur totale | Epaisseur totale (µm) | Epaisseur de l'alliage / Epaisseur totale |
| A | 1090 | 0,22 | délimitation des couches | | 1050 | 0,25 |
| B | 300 | 0,33 | | | 410 | 0,22 |
| C | 270 | 0,14 | | | 260 | 0,23 |
| D | 175 | 0,17 | le thermoformage est impossible | | 530 | 0,21 |
| E | 620 | 0,21 | | | 570 | 0,25 |
| F | 500 | 0,18 | | | 185 | 0,27 |
| G | 510 | 0,18 | | | 180 | 0,33 |
| H | 410 | 0,29 | | | 460 | 0,22 |
| I | 1090 | 0,23 | | | 1050 | 0,22 |
| | Moyenne | 0,22 | | | Moyenne | 0,24 |
| | Maxi | 0,33 | | | Maxi | 0,33 |
| | Mini | 0,14 | | | Mini | 0,21 |

Dans le cas de l'EVOH à 32 % en mole d'éthylène, la rigidité ne permet pas de procéder au thermoformage dans les conditions données.

Pour l'EVOH à 44 % en mole d'éthylène, dont la teneur en motif alcool vinylique est plus faible que dans le cas de l'EVOH précédent, le thermoformage est réalisé et la proportion de la couche d'EVOH par rapport à l'épaisseur totale est conservé : 0,22 au lieu de 0,20 dans la feuille initiale, mais l'épaisseur de la couche EVOH n'est pas régulière en particulier au point C pour lequel on mesure le minimum d'épaisseur, 0,14 de l'épaisseur totale.

Dans le cas de l'alliage de l'essai 13, l'épaisseur la plus mince est mesurée au point D avec 0,21 de l'épaisseur totale.

A partir des feuilles tricouches obtenues précédemment on réalise des thermoformages selon le schéma 2 annexé avec un rapport $\frac{H}{D} = 0,55$

Les mesures d'épaisseur sont rassemblées dans le tableau IV ci-dessous :

**TABLEAU IV**

| Essais | 17 | | 18 | | 19 | |
|---|---|---|---|---|---|---|
| Nature du matériau barrière aux gaz / point de mesure | EVOH à 44 % mole d'éthylène | | EVOH à 32 % mole d'éthylène | | Alliage Essai 13 | |
| | Epaisseur totale (µm) | Epaisseur EVOH / Epaisseur totale | Epaisseur totale (µm) | Epaisseur EVOH / Epaisseur totale | Epaisseur totale (µm) | Epaisseur de l'alliage / Epaisseur totale |
| J | 1080 | 0,20 | délimitation des couches le thermoformage est impossible | | 1050 | 0,20 |
| K | 400 | 0,20 | | | 480 | 0,21 |
| L | 140 | 0,71 | | | 150 | 0,33 |
| M | 230 | 0,65 | | | 370 | 0,24 |
| N | 570 | 0,12 | | | 475 | 0,23 |
| O | 710 | 0,17 | | | 660 | 0,20 |
| P | 1070 | 0,20 | | | 1060 | 0,20 |
| | Moyenne | 0,32 | | | Moyenne | 0,23 |
| | Maxi | 0,71 | | | Maxi | 0,33 |
| | Mini | 0,12 | | | Mini | 0,20 |

La rigidité de l'EVOH à 32 % mole d'éthylène ne permet pas de procéder au thermoformage.

Dans le cas de l'EVOH à 44 % en mole d'éthylène, l'épaisseur de la couche barrière est minimum au point N :0,12 de l'épaisseur totale alors que dans le cas de l'alliage, le minimum est atteint aux points J, O et P : 0,20 de l'épaisseur totale.

La perméabilité à l'oxygène des gobelets issus des essais 18 et 19 utilisant comme matériau barrière aux gaz l'EVOH à 32 % en mole d'éthylène et l'alliage a respectivement été mesurée. De plus, un gobelet de même dimension en PP (Copolymère statistique éthylène-propylène à 3 % en éthylène) a été évalué en perméabilité à l'oxygène à titre de comparaison.

Les résultats obtenus sont les suivants ($P0_2$ = perméabilité aux gaz) :

- $PO_2$ Gobelet tricouche (EVOH à 32 % en mole d'éthylène) > 10 CC $0_2$/jour
- $PO_2$ Gobelet tricouche (Alliage de l'essai 13) = 0,03 CC $O_2$/jour
- $PO_2$ Gobelet monocouche (Copolymère statistique éthylène-propylène à 3 % en éthylène) = 0,53 CC

$O_2$/jour

Résistance à la flexion répétée

La résistance à la fissuration du film soumis à une flexion répétée est évaluée au moyen de l'appareil décrit dans FED TEST METHOD STANDARD 101B, METHOD L017.

L'essai consiste à déformer un film de 0,28 m x 0,19 m et de 20 µm d'épaisseur préalablement disposé sous forme de cylindre sur le support de l'appareil dans les conditions suivantes :

Méthode 1 (20°C - Film sec)

Déplacement suivant l'axe du cylindre sur 0,089 m avec mouvement simultané de rotation de 400 degrés, suivi d'un déplacement latéral de 0,063 m et mouvement contraire ; ce qui représente 1 cycle.

Méthode 2 (20°C - Film sec)

Déplacement suivant l'axe du cylindre sur 0,083 m avec mouvement simultané de rotation de 400 degrés et mouvement contraire, ce qui représente un cycle.

Ces mesures appliquées aux films d'EVOH à 32 % en mole d'éthylène et d'alliage identique à celui de l'essai 13 donnent les résultats suivants :

| ESSAIS | NATURE DU MATERIAU BARRIERE AUX GAZ | NOMBRE DE TROUS | | | | |
|---|---|---|---|---|---|---|
| | | Méthode 1 | | Méthode 2 | | |
| | | 100 cycles | 200 cycles | 100 cyc. | 500 cyc. | 800 cyc. |
| 20 | EVOH à 32 % en mole d'éthylène | 146 | 261 | 33,2 | 169 | 210 |
| 21 | Alliage de l'essai 13 | 0 | 5,6 | 0 | 3,2 | 19 |

## Revendications

**1.** Alliage à base de copolymère éthylène alcool vinylique à propriété barrière aux gaz caractérisé en ce qu'il est composé d'un mélange en poids de :

- 42,5 à 99,5 % d'EVOH
- 0,4 à 42,5 % de polypropylène
- 0,1 à 15,0 % d'agent compatibilisant

L'agent compatibilisant étant choisi parmi les copolymères greffés de formule AaMbXcPd dans laquelle :

- AaMb correspond à un (co)polymère-tronc
- XcPd correspond à des polymères greffés sur le (co)polymère-tronc

A est un motif dérivé d'une α-monooléfine contenant de 2 à 8 atomes de carbone,

M est choisi dans le groupe constitué par :

- les motifs dérivés d'une ou plusieurs α-mono-oléfines contenant de 2 à 8 atomes de carbone,
- les motifs dérivés d'un monomère pouvant être polymérisé avec une des α-monooléfines précédentes,

X est un motif dérivé d'un monomère pouvant être greffé radicalairement sur un homo ou copolymère

d'α-mono-oléfine et possédant une fonction pouvant réagir avec un motif aminé,

P provient d'un oligomère de polyamide de formule :

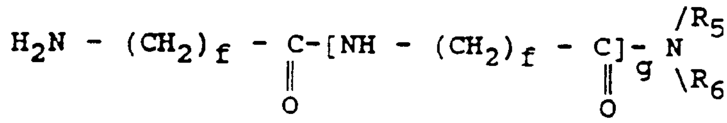

avec :

f : un nombre de 3 à 11,

g : un nombre de 3 à 80,

$R_5$ : hydrogène, ou groupement alkyle linéaire ou ramifié contenant jusqu'à 20 atomes de carbone,

$R_5$ : un groupement possédant jusqu'à 20 atomes de carbone alkyle ou alcényle linéaire ou ramifié un radical aromatique ou leur combinaison, a, b, c, d sont des nombres tels que :

- a est une valeur variant de 0 à 5000,
- la somme a + b est comprise entre 350 et 45.000,
- c est choisi de telle sorte que la teneur pondérale du motif X greffé sur le (co)polymère-tronc par rapport au copolymère greffé avec X est comprise entre 500 ppm et 10 %,
- d est supérieur à 0 et inférieur ou égal à C.

2. Alliage selon la revendication 1 caractérisé en ce que la proportion en moles d'éthylène dans l'EVOH est compris dans l'intervalle de 3 à 75 % et de préférence de 10 à 50 %.

## Patentansprüche

1. Kunststoff-Legierung auf der Basis von Ethylen/VinylalkoholCopolymeren (EVOH) mit Gastrennungseigenschaften, dadurch gekennzeichnet, daß sie aus einer Mischung zusammengesetzt ist, die:
   - 42,5 bis 99,5 Gewichtsprozent EVOH
   - 0,4 bis 42,5 Gewichtsprozent Polypropylen
   - 0,1 bis 15 Gewichtsprozent eines Kompatibilisierungsmittels (Mischbarkeitsverbesserer)

   enthält.

   Das Kompatibilisierungsmittel wird ausgewählt aus Pfropfcopolymeren der Formel AaMbXcPd, in der:
   - AaMb ein Basiscopolymer darstellt,
   - XcPd auf das Basiscopolymer aufgepfropfte Polymere darstellen.

A ist eine Struktureinheit eines alpha-Monoolefinderivats, welches 2 bis 8 Kohlenstoffatome enthält,

M wird ausgewählt aus einer Gruppe, die:

- Struktureinheiten eines oder mehrerer alpha-Monoolefine mit 2 bis 8 Kohlenstoffatomen enthält,
- Struktureinheiten eines Monomerderivats enthält, das mit einem der vorstehend genannten alpha-Monoolefine polymerisiert werden kann,

X ist eine Struktureinheit eines Monomerderivats, das radikalisch auf ein Homo- oder Copolymeres des alpha-Monoolefins aufgepfropft werden kann und das eine funktionelle Gruppe enthält, die eine Reaktion mit einer Amin-Struktureinheit ermöglicht,

P stellt ein oligomeres Polyamid der Formel:

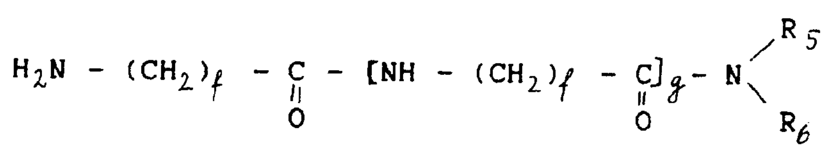

dar, mit:

f : einer Zahl zwischen 3 und 11,

g : einer Zahl zwischen 3 und 80,

$R_5$ : einem Wasserstoffrest oder einer linearen oder verzweigten Alkylgruppe mit bis zu 20 Kohlenstoffatomen,

$R_6$ : einer Gruppierung, die bis zu 20 lineare oder verzeigte, alkylierte oder alkenylierte Kohlenstoffatome, einen aromatischen Rest oder deren Kombination, enthält,

a, b, c, d stellen Zahlen dar, wie:

- a besitzt einen Wert zwischen 0 und 5000,
- die Summe a + b beträgt zwischen 350 und 45.000,
- c wird derartig ausgewählt, daß das Gewichtverhältnis zwischen der auf das Basiscopolymer aufgepfropften Struktureinheit X und dem mit X gepfropften Copolymeren zwischen 500 ppm und 10 % beträgt,
- d ist größer als 0 und kleiner oder gleich c.

**2.** Kunststoff-Legierung nach Anspruch 1, dadurch gekennzeichnet, daß der Molgehalt an Ethylen im EVOH zwischen 3 und 75 %, vorzugsweise 10 bis 50 %, beträgt.

## Claims

**1.** Alloy based on ethylene-vinyl alcohol copolymer with a gas barrier property, characterised in that it is composed of a mixture, by weight, of:

- 42.5 to 99.5 % of EVOH
- 0.4 to 42.5 % of polypropylene
- 0.1 to 15.0 % of compatibilising agent

The compatibilising agent being chosen from graft copolymers of formula AaMbXcPd in which:

- AaMb corresponds to a backbone (co)polymer
- XcPd corresponds to polymers grafted onto the backbone (co)polymer

A is a unit derived from an α-monoolefin containing from 2 to 8 carbon atoms,

M is chosen from the group consisting of:

- units derived from one or more α-monoolefins containing from 2 to 8 carbon atoms,
- units derived from a monomer which can be polymerised with one of the above α-monoolefins,

X is a unit derived from a monomer which can be grafted by a radical route onto an α-monoolefin homo- or copolymer and which contains a functional group capable of reacting with an amine unit,

P originates from a polyamide oligomer of formula:

$$H_2N - (CH_2)_f - \underset{\underset{O}{\|}}{C} - [NH - (CH_2)_f - \underset{\underset{O}{\|}}{C}]_g - N\begin{matrix} / R_5 \\ \backslash R_6 \end{matrix}$$

with:

f : a number from 3 to 11,

g : a number from 3 to 80,

$R_5$ : hydrogen or a linear or branched alkyl group containing up to 20 carbon atoms,

$R_6$ : a linear or branched alkyl or alkenyl group containing up to 20 carbon atoms, an aromatic radical, or a combination thereof,

a, b, c and d are numbers such that:

- a is a value varying from 0 to 5000,
- the sum a + b is between 350 and 45000,
- c is chosen so that the weight content of the unit X grafted onto the backbone (co)polymer relative to the copolymer grafted with X is between 500 ppm and 10 %,
- d is greater than 0 and smaller than or equal to C.

**2.** Alloy according to Claim 1, characterised in that the molar proportion of ethylene in the EVOH is included in the range from 3 to 75 % and preferably from 10 to 50 %.

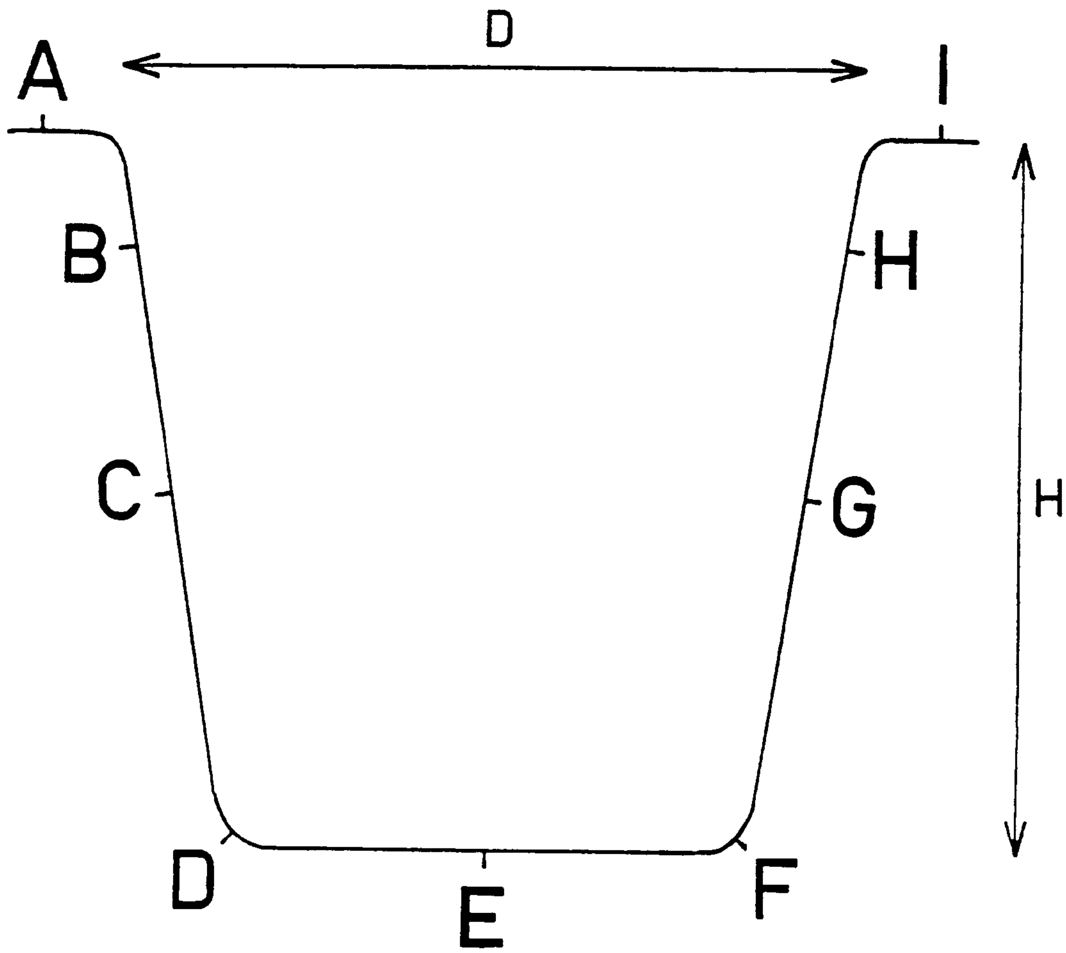


Schéma 1

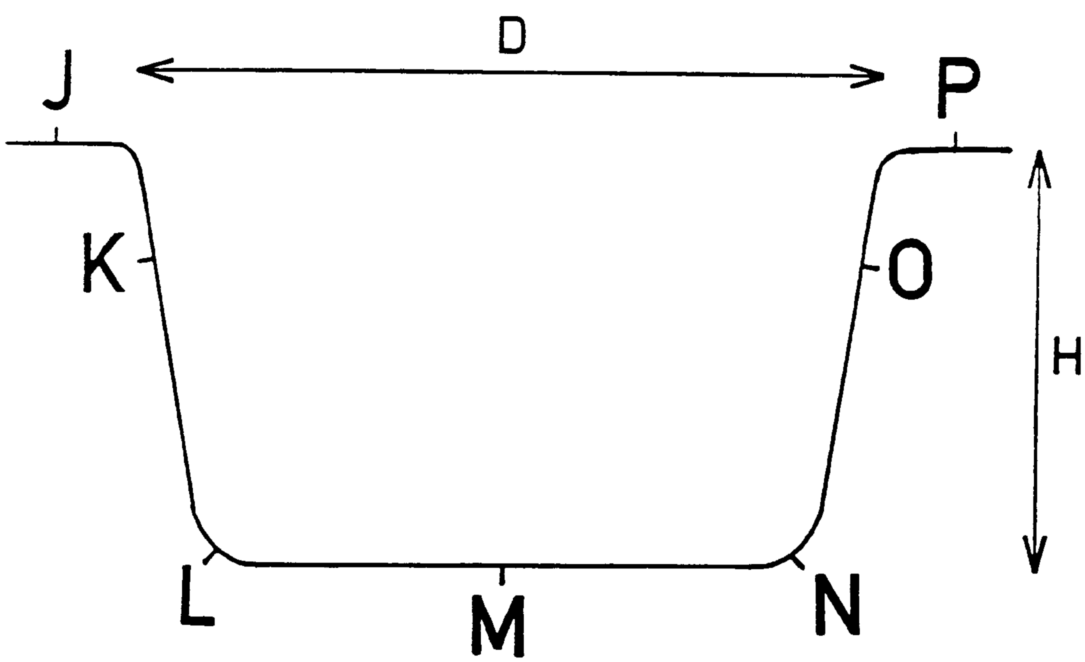


Schéma 2